# EUROPEAN PATENT SPECIFICATION

(11) **EP 4 197 752 B1**
(45) Date of publication and mention of the grant of the patent: **12.11.2025**
(21) Application number: 22213273.0
(22) Date of filing: 13.12.2022
(51) Int. Cl.: B29C 65/16, B29C 65/82, B29K 101/12, B29K 105/04, B29K 23/00

(54) **LASER WELDING OF CELLULAR AND NON-CELLULAR POLYMERIC MATERIALS**
LASERSCHWEISSEN VON ZELLIGEN UND NICHTZELLFÖRMIGEN POLYMERMATERIALIEN
SOUDAGE AU LASER DE MATÉRIAUX POLYMÈRES CELLULAIRES ET NON CELLULAIRES

(30) Priority: 15.12.2021 PT 2021117640
(43) Date of publication of application: 21.06.2023
(73) Proprietor: Universidade de Aveiro, 3810-193 Aveiro (PT)
(72) Inventor: de Bastos Pereira, António Manuel, 3800-127 Aveiro (PT); Fernandes, Fábio António Oliveira, 4520-238 Santa Maria da Feira (PT); Alves, Cristiano Fernando Lopes, 2435-037 Caxarias (PT)
(74) Representative: Alves Moreira, Pedro

(56) References cited:
- JP-A- 2005 271 206

## Description

### Domínio técnico

The present invention employs laser welding for joining thermoplastic polymers, particularly the joining between non-cellular and cellular ones.

### BACKGROUND OF THE INVENTION

Currently, more than 150,000 passenger vehicles are produced daily. Each of these vehicles has polymeric components of cellular structure, particularly open-cell ones, which are bound to non-cellular polymeric materials. In addition to the automotive industry, the aeronautical and furniture industries also have products in their portfolio that involve bonding these materials. Other examples of bonding between these two types of materials are the manufacture of personal protective equipment, electronic equipment (such as headphones), structures for the protection of equipment or products and packaging (e.g., from transportation cases of laboratory, musical or measuring equipment to generic suitcases).

The industry uses adhesives/glues (thermoset polymers) to bond these materials, typically via manual processes. This approach presents some intrinsic drawbacks.

Firstly, this is typically a manual and poorly automated procedure, which means that it is lengthy and prone to human error. It is a process that can involve resins curable at room temperature as well as at high temperatures. Therefore, heating thermosetting polymers at high temperatures is associated with the release of toxic residues/fumes, which can be harmful not only to the operator but also to the environment. Currently, the concern about ecological procedures, particularly when the opposite is easily convertible, is increasing. Therefore, there is an increasing need for new sustainable approaches.

Laser technology is widely used to cut or weld metal components. More recently, its potential in the connection between polymeric materials has been explored, particularly between rigid non-cellular polymeric materials. Depending on the configuration, there are two variants of the process: direct laser welding and laser transmission welding. The invention described in this document is based on the latter.

The document JP 2005271206 A1 relates to a laser beam emitted to a foamed resin material from the side of a transparent resin material so as to closely bond a transparent resin material for permitting the laser beam to transmit and a foamed resin layer including carbon black. A molten basin is formed by the heat caused in the foamable resin material upon the absorption of the heat energy of the laser beam. At this time, since the foamed cells of a foamable resin material become a heat insulating material to prevent the diffusion of heat, the accumulation of heat in the molten basin is accelerated to effectively transfer heat to the transparent resin material. That is, since the loss of heat energy is reduced, the resin can be melted in a short time by relatively low energy. Thereafter, the molten resin is solidified and a welded part is formed to weld both resin materials.

The document US2011008565A1 discloses a method of manufacturing laminates for the interior of vehicles (roofs). This consists of bonding several layers of polypropylene foams using a hot plate press or the direct laser joining process. Only the connection between foams is made with laser use, focusing directly on the interface between the materials to be connected. The present invention introduces a methodology capable of joining thermoplastics of dissimilar morphology, cellular (foams) to non-cellular, using solely laser technology (using non-cellular thermoplastic as a transmission element of laser radiation), without the need for adhesives, hot plate presses, ovens or laminators unlike the method described in US2011008565A1.

The document Pereira, A.B.; Fernandes, F.A.O.; de Morais, A.B.; Quintão, J. Mechanical Strength of Thermoplastic Polyamide Welded by Nd:YAG Laser. Polymers 2019, 11, 1381. https://doi.org/10.3390/polym11091381 discloses laser transmission welding between non-cellular thermoplastics, particularly natural polyamide 6 (PA6) characterised by high transmittance to infrared radiation and dyed PA6 characterised by high absorbance to infrared radiation. The joining between thermoplastics of dissimilar morphology (between cellular and non-cellular ones) is not addressed in the cited document. Moreover, in the same document, it is clear that the conditions of the process, particularly the process parameters, cannot be successfully employed to join the materials described in the present invention. The present invention presents the optimal conditions of the process to join thermoplastics of dissimilar morphology, cellular (foams) to non-cellular, using laser transmission welding.

The document Hopmann, C., Kreimeier, S. Thermal joining of foamed thermoplastic injection-moulded parts using laser radiation. Weld World 61, 1237-1245 (2017). https://doi.org/10.1007/s40194-017-0499-9 discloses the use of the transmission laser welding method in the joining between closed-cell polypropylene (PP) foams (closed-cell thermoplastics). The latter stands out from the invention disclosed in the document US2011008565A1 since it uses a cellular component transmissible to laser radiation, as performed in the document Pereira, A.B.; Fernandes, F.A.O.; de Morais, A.B.; Quintão, J. Mechanical Strength of Thermoplastic Polyamide Welded by Nd:YAG Laser. Polymers 2019, 11, 1381. https://doi.org/10.3390/polym11091381 for non-cellular thermoplastics. The present invention introduces the innovative joining between cellular and non-cellular materials, so far not disclosed in any document, and the conditions of the process for joining between thermoplastic materials with dissimilar morphologies.

As described above, the joining between polymeric materials that present the same morphology is not unusual, which is not the case for joining dissimilar polymeric materials, specifically between cellular polymers and non-cellular polymers.

The method described in the present invention eliminates the need for an adhesive element and makes the process more sustainable. Moreover, this process is characterised by greater flexibility, speed, repeatability and quality. This accurate technology makes it possible to automate a vastly manual process, eliminating adhesive elements and the time and energy spent in the curing process.

The innovation of the present invention concerns the bonding, through laser transmission welding, of two types of materials never joined without adhesives, more specifically, a non-cellular rigid thermoplastic polymer characterised by presenting a high transmittance to the laser wavelength, to an open cell polymer foam with sufficient absorbance at the same wavelength to melt and join both materials. This type of bonding makes it possible to eliminate adhesive joints used so far to bond these materials.

The present invention has industrial applications, in particular in the automotive industry, furniture, aeronautical industry, sports equipment and personal protection equipment, electronic equipment, clothing, packaging and related structures for the protection of equipment or products such as transport and protective cases bags, i.e. any component where there is the need to join the materials described, in particular the welding of any artefact consisting of a rigid non-cellular thermoplastic and an open-cell polymeric foam, joined using a laser, which can be automated or not.

### GENERAL DESCRIPTION OF THE INVENTION

The present invention, as defined in claim 1, focuses on the welding between a non-cellular thermoplastic structure (2) and a polymeric cellular structure (3), which is a polypropylene open-cell foam. The non-cellular polymeric material (2) usually presents - but is not limited to - a solid structure.

The proposed methodology implies the overlapping of the materials to be joined, in which the non-cellular polymeric material (2) is on top of the cellular polymeric material (3) in an overlapping joint configuration. Directly on the non-cellular material, a laser beam (1) is focused perpendicularly to the surface or with an angle with the normal plane.

The non-cellular thermoplastic (transmitting) material placed on the cellular polymeric material is characterised by having high transmittance to the wavelength used. This material has a transmittance of more than 40%. However, this invention is not limited to this and may be used with materials with lower transmittances if providing the expected performance for the intended purpose. In the end, obtaining a joint between both components is possible but of lower quality, characterised by a lower mechanical strength.

The cellular polymeric material (absorbent) or polymeric foam, placed under the non-cellular rigid thermoplastic, is characterised by having a high absorbance in the wavelength used, or at least significantly higher than the non-cellular thermoplastic. The absorbance value of the material is not between any defined range of values. It needs to be sufficient to absorb the energy provided by the laser beam, enough for its fusion to occur and, by conduction, to cause the fusion of the material superimposed on it, promoting the joining between them. A fabric, non-woven or similar coverings on the surface opposite the joint can cover this material.

Both materials should be pressed against each other to have intimate contact, ensuring the necessary heat conduction. So that miscibility may occur between both materials to form a viable joining to the desired application. The applied pressure becomes an even more decisive factor than in the joints between non-cellular thermoplastics, given the reduced theoretical contact area between the open-cell foam structure and the surface of the non-cellular thermoplastic. With increased pressure on open cell foam, cells collapse in the region of contact with the surface of the non-cellular thermoplastic, increasing the potential joint area.

### Description of the Figures and Drawings

The following figures present preferential configurations, parameters and achievements of the invention that, in further non-limiting embodiments, do not intend to limit the object of the present invention.

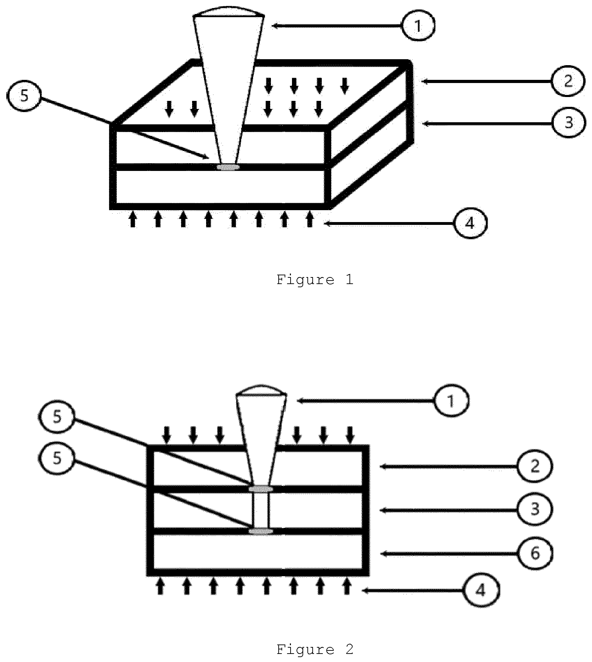

Figure 1: Representation of a non-limiting embodiment - welding process in which the reference signal (1) refers to the laser beam, which will make it possible to achieve a joint between the materials; (2) refers to the non-cellular polymeric material, which transmits the laser radiation; (3) refers to the cellular polymeric material (open-cell foam) which absorbs the laser radiation;(4) refers to the pressure applied by the fixation device to ensure intimate, constant and uniform contact between the materials; (5) refers to the welding joint, which is the result of the energy provided by the laser beam and culminates in the welding of the materials.
Figure 2: Representation of a way of performing the welding process, specifically regarding the same process referred to in Figure 1. It demonstrates that it is not limited to two components or layers where the reference signal (6) refers to the intermediate non-cellular polymer plate, creating a sandwich structure with the cellular polymeric material (3) being the core.

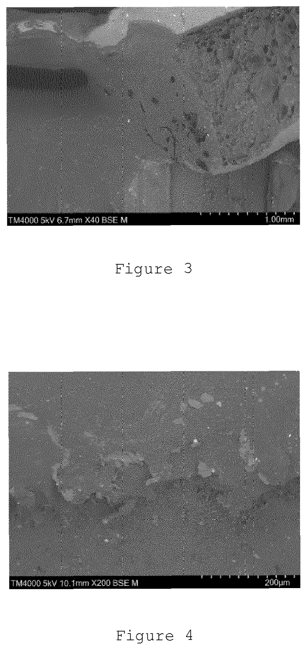

Figure 3: Depicts the bonding between open-cell polypropylene (PP) foam (cellular material, laser radiation absorber) and polypropylene plate (non-cellular material, laser radiation transmitter).
Figure 4: It represents the non-cellular polymer - polypropylene - after the PP foam has been pulled out, after a shear test to determine the joint strength. The presence of foam in the non-cellular material after pullout is a demonstrator of the quality of the connection achieved.

### DETAILED DESCRIPTION OF THE INVENTION

The developed method uses laser welding to achieve joints between thermoplastics, particularly between a non-cellular and a cellular polymer such as open-cell foam. This method implies the overlapping of non-cellular material on the cellular material in an overlapping joint configuration; the fusion of the polymeric material through the focusing of a laser beam, preferably vertical to the surface; and the application of constant and uniform pressure on the surfaces of the polymeric materials.

The non-cellular polymeric material (2) at the top, on which the laser focuses, is characterised by a high transmittance to the laser beam radiation for the wavelength used. A high absorbance for the same wavelength characterises the cellular polymeric material (3). The material at the top, and on which the laser focuses, refers to the rigid and non-cellular thermoplastic polymer (2). In contrast, the material with high absorbance (at the base) concerns the cellular polymeric material (3) (open-cell foam). In order to apply this joining method, both materials must present intimate contact with each other, which must be guaranteed by any fastener or fixation device that applies the necessary pressure (4) on both materials.

The quality of the joint depends on the surfaces to be connected. Thus, the joint mechanical strength between the materials can be improved by conducting surface treatments on the non-cellular thermoplastic. These can be mechanical (abrasive) or by employing a laser or even a chemical treatment. The roughness (irregularities) of the surface in contact with the open cell foam increases the contact area between both materials, and due to the fusion of material and the effect of pressure, a joint is created through the mechanical interlocking between the two irregular surfaces.

The laser device is characterised by presenting an active medium capable of producing a laser beam with a wavelength suitable for the application described in the present document. The wavelength for both components, absorber and transmitter of laser radiation, depends on the optical properties of each material. Still, its wavelength is forcibly between 800-2500 nm, i.e. infrared radiation or near-infrared. In addition, on the one hand, the transmitting material must be able to transmit the laser beam in higher energy quantities to reach the underlying material. On the other hand, it must have sufficient energy density for the absorber material to melt and conduct energy in the form of heat to the material preceding it. Preferably, the energy density is 0.01-10 J/mm². That is, 0.01-10 J for each mm of the total length of the weld joint produced with a beam of 1 mm.

The required laser power depends on several factors, such as laser beam diameter, melting and degradation temperatures, and surface roughness of each of the materials employed, which makes it impossible to provide a range of values for all parameters that can be changed when joining these materials. Of these, the laser power, the pulse width and the percentage of overlap (in the case of using the laser device in pulsed mode), welding speed, and focal length can be highlighted. Regarding the surface finishing, surface treatments may eventually be made to the non-cellular polymer, which generates imperfections/roughness on the surface, in order to increase its potential contact area with the underlying material through mechanical interlocking to improve the joint. The weld joint quality produced through this method is directly related to its area.

The laser power is widely considered the most relevant laser parameter in this type of joining since it is largely responsible for the amount of energy introduced to the system and, thus, the penetration. Preferably, this value is between 0.5-50 W

As for welding speed, it defines the duration of the laser-polymer interaction, which is higher the lower the speed. The lower the welding speed, the greater the probability of introducing excessive energy into the system, promoting overheating and decomposition of the materials involved. Similarly, the opposite may occur, and the melting temperature of the materials may not be reached.

The beam diameter is the parameter that defines the target area, which determines the energy density in the weld region, and is established by focal length - a higher focal length implies an equally higher beam diameter, and the opposite applies. A higher focal length implies a lower energy density. Usually, a beam diameter between 0.1 mm and 10 mm can be used.

In addition to the parameters directly related to the laser, as previously stated, other factors must be considered. The pressure (4) that ensures contact between the components to be joined plays a substantial role in the resulting joint. Generally, the pressure applied to the materials is within - but not limited to - 0.5 to 4 MPa. However, higher pressures may be required to ensure close contact between both materials, heat conduction and miscibility of the material while at the same time not damaging the components or affecting their applicability. Furthermore, this pressure may be applied mechanically, pneumatically, hydraulicly or in another way as long as it ensures intimate contact between the materials to weld.

Regarding the geometric characteristics of each material, these shall have thicknesses that allow both to meet the requirements of the intended application and particularly, to make this joining possible. This type of joining is highly dependent on the optical properties of the materials. In the case of the cellular component, its cell size, the foam density and its thickness affect the binding quality. High densities and reduced thicknesses allow higher-quality connections compared to foams with large cells and higher thicknesses. In the case of the non-cellular component, a higher thickness is associated with a greater distance that the laser has to pass through and may suffer diffractions and energy losses that can negatively influence the joint quality.

In non-limiting embodiments, the thickness of the material varies between 0.1 mm and 10 mm. In a preferred embodiment, the thickness of the material varies between 0.1 mm and 6 mm, and in a more preferred embodiment, the thickness of the material varies between 0.2 mm and 4 mm.

Regarding the maximum temperature reached by applying the described method, it must be below the material thermal degradation temperature. Ideally, it should be 0.8*TDT (TDT = thermal decomposition temperature). However, the viability of this method is not limited by this. The TDT of the cellular material is lower than the non-cellular one, so the temperature in the entire model should be below this temperature.

In addition to the properties described, the materials must also present specific characteristics to make joining possible.

Firstly, the materials must be chemically compatible, i.e. polymer chains must have the ability to form secondary bonds. In addition, they must have similar molecular structures.

Secondly, materials must have similar melting flow indices. For polymer chains to be able to blend, molten polymers require similar viscosities. To form a cohesive bond, the melting flow indices of the materials must be within 10% of each other. However, the viability of this method is not limited to this fact.

Lastly, materials must have similar melting temperatures. For most welding methods, the temperature in the weld joint is the same for both materials, implying that the melting temperatures of all materials should be as close as possible. If this requirement is not met, at the limit, and if the melting temperatures of the materials are excessively distinct, one material may be already decomposed when the other starts to melt.

In a non-limiting embodiment, the melting temperature of the method of the invention varies between 80-300 °C. In a preferred embodiment, the melting temperature of the method of the invention varies between 50-200 °C. In a more preferred embodiment, the melting temperature is between 50-180 °C.

The method described does not imply using the referred materials in their purest state, i.e. additives can be used. This practice is particularly used in the transmitting material, responsible for transmitting the laser beam to the underlying material. Additives usually used are dyes, fillers and reinforcements, and pigments. Dyes, consisting of organic molecules, dissolve in the middle of the application, so no isolated particles are visible, and the laser transmittance is not affected.

Fillers and reinforcements are used to improve polymers' physical and mechanical properties. However, due to their composition and particle size, these significantly affect the material optical properties. The laser transmittance of the material tends to decrease with the increase in the concentration of fillers and reinforcements. Nevertheless, this does not preclude laser transmission welding. The concentrations and nature of the added fillers or reinforcements must be evaluated before performing this procedure.

Pigments, unlike dyes, do not dissolve in the material's polymer matrix due to their particle size, demonstrating excellent resistance to migration. The pigments can be subcategorized into organic and inorganic. Their primary difference is the size of the particles that constitute them. The particle dimensions of the organic pigments are inferior. For laser transmission welding, it is preferable to resort to organic pigments (rather than inorganic pigments) since these have a minor influence on the material's optical properties. However, any pigments can be used, depending on the concentration and desired application.

Thus, the joining described has great potential for replacing glues/adhesives or mechanical fasteners, typically used to bond cellular polymeric components to non-cellular components. Additionally, it makes it possible to reduce the processing time, automate the process and improve its sustainability. The interests and applications can be various. In particular, one can use this technology to produce sandwich-type panels (laminated composite), having the cellular polymeric material as its core. This solution allows various applications, considering the possible mechanical, thermal and acoustic properties.

All polymeric materials with morphological structures described in this document can be joined following the described method. The main challenge lies in the selection of laser parameters due to the superior thermal sensitivity of cellular polymeric materials.

In a non-limiting embodiment, the described method implies focusing a laser beam, with the characteristics mentioned, through a polymeric material of non-cellular morphology, highly transmitting to the laser wavelength employed. After crossing the non-cellular material, the laser beam will reach the polymeric material of cellular morphological structure, absorbing the laser energy. With the absorption of energy, the cellular material will reach its melting temperature (which differs from material to material) and, by conducting heat, will transfer part of the absorbed energy to the material that supersedes it - the non-cellular one. The non-cellular material will, in turn, reach its melting temperature (which, again, differs from material to material). The clamping device ensures intimate contact between the materials in the region to be welded. Therefore, the molten materials will generate a volume of molten polymeric material composed of both materials involved in the process. By cooling (e.g., at room temperature), the molten material solidifies, forming the weld joint.

In another embodiment, the described method can be replicated on the opposite side to which this method applies. That is, place another transmitting polymer on the opposite side, so that the cellular material (absorber) is in the middle of both (sandwich structure). The operation can be reproduced in the same way as previously described but on the opposite side.

### Example

Next, it is presented a case study made with materials widely used in the automotive, furniture and even aeronautical industries. In this particular case, it was joined materials typically included in a car's door interior panel. Polypropylene (non-cellular material and laser radiation transmitter) was joined to polypropylene foam (cellular material and laser radiation absorber). The cellular material used has the particularity of being coated with polychloride vinyl (PVC) on one side, which aims to be the material exposed directly to the user (skin/leather substitute). This covering is, however, irrelevant to the connection to be made, which is made in the foam. Therefore, this invention allows applying any coating or covering layer (on the opposite surface of the joining one) that is intended without invalidating the invention described. The method of bonding between these materials is usually performed by employing a polyolefin-based glue through a mostly manual process. In this case study, the SISMA SWA-300 laser device was used. After carefully selecting parameters, a power of 8%, energy of 7.6 J, pulse duration of 7 ms, an overlap of 60% and a beam diameter of 2 mm were used. It should be noted that in a conventional transmission joining between two non-cellular materials, the energy quantity would predictably be higher. A clamping device was used to apply a pressure on the materials, suitable for the desired application.

After joining both materials, tensile tests were performed in order to apply shear stress in the weld joint. The weld joint has a shear strength of 0.96 MPa, with failure occurring in the foam's cell structure, leaving residual amounts of foam on the non-cellular thermoplastic after pull-out.

This result, when compared to joints associated with higher energy quantities, is preferable. A joint performed with a power of 10%, a pulse duration of 8 ms and an overlap of 70%, which result in 9.8 J of energy, presented after conducting the analogous mechanical characterization mentioned above, a strength of 0.74 MPa. The same situation was verified for all tests performed, associated with higher energy loads than the case under study.

The other experimental results are shown in the table below, which show that, in general, better results are associated with lower energy loads.

| Parameter set | Power (%) | Pulse width (ms) | Overlapping (%) | Energy (J) | Strength (MPa) |
|---|---|---|---|---|---|
| 1 | 8 | 7 | 60 | 7.6 | 0.98 |
| 2 | 8 | 8 | 65 | 8.7 | 0.84 |
| 3 | 8 | 9 | 70 | 9.8 | 0.79 |
| 4 | 10 | 7 | 65 | 8.6 | 0.81 |
| 5 | 10 | 8 | 70 | 9.8 | 0.74 |
| 6 | 10 | 9 | 60 | 11.0 | 0.83 |
| 7 | 12 | 7 | 70 | 9.5 | 0.82 |
| 8 | 12 | 8 | 60 | 10.8 | 0.82 |
| 9 | 12 | 9 | 65 | 12.2 | 0.77 |

After conducting the tests to validate this methodology, a scanning electron microscope was used. Figure 3 shows the joint between polypropylene (PP) open-cell foam (cellular material, laser energy absorber) and polypropylene plate (non-cellular material, laser energy transmitter). Figure 4 shows the non-cellular polymer - polypropylene - after pulling out the PP foam. It should be noted that pullout successfully implies deposition of cellular material on the non-cellular material given the traces of PP foam on the PP plate (non-cellular).

A good joint can be observed between the materials. The foam in the area where the joining was performed presents a minor cellular morphological deformation, presenting a great potential for the intended application. The PVC surface, after thorough inspection, remained intact, fully preserved, and the method of connection between the underlying materials was indistinguishable.

With the laser parameters mentioned, the foam remains able to give the desired sensation (since it is intended to serve as upholstery or coating for interior panels of automobiles or other vehicles). Thus, the method described here is innovative.

In Figure 4, despite the difficulty of observation, resulting from analysing two materials of the same nature (polypropylene - PP), residual PP foam is observable at the interface where the foam was welded. This observation expresses an acceptable joint between both materials since part of the failure occurred due to pull-out rather than pure detachment.

In addition to being feasible for the demonstrated application (door panel of the automobile - automotive industry), this method can also be used for various applications, such as for the furniture industry regarding chairs or sofas, aeronautical industry, for commercial aircraft and other aircraft, aerospace industry, for the interior of space vehicles, among other applications that fit the spectrum of this invention.

The terms "includes", "comprises", "encompasses" or another synonym, when used in this document, are intended to indicate the presence of the characteristics, elements, steps and components mentioned. Nevertheless, it is possible to add one or more other characteristics, elements, steps and components, or groups of them.

The invention should not be seen in any way restricted to the embodiments and achievements described. A person with common skills in the technique will predict many possibilities of modifying them within the scope of the appended claims.

The described embodiments described above can be combined within the scope of the appended claims.

## Claims

1. Laser welding method between cellular and non-cellular polymeric materials comprising the following steps:
overlap of non-cellular material (2) on cellular material (3), in an overlapping joint configuration;
application of constant and uniform pressure (4) on the surface of polymeric materials (2, 3);
fusion of polymeric material (2, 3) through the incidence of a laser beam (1), preferably perpendicular to the surface of the non-cellular polymeric material (2),
**characterized by** the cellular polymeric material (3) being a polypropylene open-cell foam.

2. A method in accordance with the previous claim, **characterized by** the non-cellular polymeric material (2) being polypropylene.

3. A method in accordance with the previous claims, **characterized by** the cellular polymeric material (3) having a covering layer of polyvinyl chloride.

4. A method in accordance with the previous claims, **characterised by** a polymeric material with thicknesses within 0.1 mm and 10.0 mm.

5. A method in accordance with the claim 1, **characterised by** a laser beam (1) with a diameter within 0.1-10 mm, which can be a gas laser, solid-state laser, fibre laser, liquid laser or laser diode, with a wavelength between 800 and 2500 nm, and a laser power of 0.5-50 W.

6. A method in accordance with the previous claims, **characterised by** a polymeric cellular material (3) with a 50% of absorbance.

7. A method in accordance with the previous claims, **characterised by** materials with melt flow index within an interval range of 10% between them.

8. A method in accordance with the previous claims, **characterised by** a melting temperature below the decomposition temperature of the material, 80% below it.

9. A method in accordance with the previous claims, **characterised by** a constant and uniform pressure (4) applied on the polymeric materials (2, 3) and within 0.5 - 4.0 MPa.

10. A method in accordance with the previous claims, **characterised by** a non-cellular material (2) in its natural colour.

11. A method in accordance with the previous claims, **characterised by** polymeric materials (2, 3) incorporating additives such as dyes, reinforcements, fillers and pigments, preferably in the non-cellular polymer.

12. A method in accordance with the previous claims, **characterised by** the non-cellular material (2) having a textile or non-woven layer covering the opposite surface to the joint one.

13. A method in accordance with the previous claims, **characterised by** employing two non-cellular materials (2) covering the two sides of the cellular (3) one (sandwich structure), welding on both sides.

## Patentansprüche

1. Laserschweißverfahren zwischen zellulären und nicht-zellulären polymeren Materialien, das die folgenden Schritte umfasst:
Überlappung von nicht-zellulärem Material (2) auf zelluläres Material (3) in einer überlappenden Fugengestaltung;
Anlegen eines ständigen und gleichmäßigen Drucks (4) auf die Oberfläche von polymeren Materialien (2, 3);
Verschmelzung von polymerem Material (2, 3) durch Einfall eines Laserstrahls (1), vorzugsweise senkrecht zur Oberfläche des nicht-zellulären polymeren Materials (2),
**dadurch gekennzeichnet, dass** das zelluläre polymere Material (3) ein offenzelliger Polypropylenschaum ist.

2. Verfahren nach dem vorhergehenden Anspruch, **dadurch gekennzeichnet, dass** das nichtzelluläre polymere Material (2) Polypropylen ist.

3. Verfahren nach den vorhergehenden Ansprüchen, **dadurch gekennzeichnet, dass** das zelluläre polymere Material (3) eine Deckschicht aus Polyvinylchlorid aufweist.

4. Verfahren nach den vorhergehenden Ansprüchen, **gekennzeichnet durch** ein polymeres Material mit Dicken innerhalb von 0,1 mm und 10,0 mm.

5. Verfahren nach Anspruch 1, **gekennzeichnet durch** einen Laserstrahl (1) mit einem Durchmesser innerhalb von 0,1 und 10 mm, bei dem es sich um einen Gaslaser, Festkörperlaser, Faserlaser, Flüssigkeitslaser oder eine Laserdiode mit einer Wellenlänge zwischen 800 und 2500 nm und einer Laserleistung von 0,5 bis 50 W handelt.

6. Verfahren nach den vorhergehenden Ansprüchen, **gekennzeichnet durch** ein zelluläres polymeres Material (3) mit einem Absorptionsgrad von 50%.

7. Verfahren nach den vorhergehenden Ansprüchen, **gekennzeichnet durch** Materialien mit einem Schmelzindex innerhalb eines Intervallbereichs von 10% zwischen ihnen.

8. Verfahren nach den vorhergehenden Ansprüchen, **gekennzeichnet durch** eine Schmelztemperatur unterhalb der Zersetzungstemperatur des Materials, 80% darunter.

9. Verfahren nach den vorhergehenden Ansprüchen, **gekennzeichnet durch** einen ständigen und gleichmäßigen Druck (4), der auf die polymeren Materialien (2, 3) und innerhalb von 0,5 bis 4,0 Mpa angewendet wird.

10. Verfahren nach den vorhergehenden Ansprüchen, **gekennzeichnet durch** ein nichtzelluläres Material (2) in seiner natürlichen Farbe.

11. Verfahren nach den vorhergehenden Ansprüchen, **gekennzeichnet durch** polymere Materialien (2, 3), die Additive wie Farbstoffe, Verstärkungen, Füllstoffe und Pigmente, vorzugsweise in dem nichtzellulären Polymer, enthalten.

12. Verfahren nach den vorhergehenden Ansprüchen, **dadurch gekennzeichnet, dass** das nichtzelluläre Material (2) eine Textil- oder Vliesschicht aufweist, die die gegenüberliegende Oberfläche der Verbindungsfläche bedeckt.

13. Verfahren nach den vorhergehenden Ansprüchen, **dadurch gekennzeichnet, dass** zwei nichtzelluläre Materialien (2) verwendet werden, die die beiden Seiten des zellulären Materials (3) bedecken, eines (Sandwichstruktur), das auf beiden Seiten verschweißt ist.

## Revendications

1. Procédé de soudage laser entre matériaux polymères cellulaires et non cellulaires comprenant les étapes suivantes :
chevauchement d'un matériau non cellulaire (2) sur un matériau cellulaire (3), dans une configuration de joint de chevauchement ;
application d'une pression constante et uniforme (4) sur la surface des matériaux polymères (2, 3) ;
fusion du matériau polymère (2, 3) par l'incidence d'un faisceau laser (1), de préférence perpendiculaire à la surface du matériau polymère non cellulaire (2),
**caractérisé en ce que** le matériau polymère cellulaire (3) est une mousse à cellules ouvertes en polypropylène.

2. Procédé selon la revendication précédente, **caractérisé en ce que** le matériau polymère non cellulaire (2) est du polypropylène.

3. Procédé selon les revendications précédentes, **caractérisé en ce que** le matériau polymère cellulaire (3) comporte une couche de revêtement en chlorure de polyvinyle.

4. Procédé selon les revendications précédentes, **caractérisé par** un matériau polymère avec des épaisseurs comprises entre 0,1 mm et 10,0 mm.

5. Procédé selon la revendication 1, **caractérisé par** un faisceau laser (1) avec un diamètre compris entre 0,1 et 10 mm , qui peut être un laser à gaz, un laser à solide, un laser à fibre, un laser à liquide ou une laser à diode, avec une longueur d'onde comprise entre 800 et 2500 nm et une puissance laser de 0,5-50 W.

6. Procédé selon les revendications précédentes, **caractérisé par** un matériau cellulaire polymère (3) avec une absorbance de 50 %.

7. Procédé selon les revendications précédentes, **caractérisé par** des matériaux dont l'indice de fluidité à chaud se situe dans un intervalle de 10 % entre eux.

8. Procédé selon les revendications précédentes, **caractérisé par** une température de fusion inférieure à la température de décomposition du matériau, 80 % en dessous de celle-ci.

9. Procédé selon les revendications précédentes, **caractérisé par** une pression constante et uniforme (4) appliquée sur les matériaux polymères (2, 3) et comprise entre 0,5 et 4,0 Mpa.

10. Procédé selon les revendications précédentes, **caractérisé par** un matériau non cellulaire (2 ) dans sa couleur naturelle.

11. Procédé selon les revendications précédentes, **caractérisé par** des matériaux polymères (2, 3) incorporant des additifs tels que des colorants, des renforts, des charges et des pigments, de préférence dans le polymère non cellulaire.

12. Procédé selon les revendications précédentes, **caractérisé en ce que** le matériau non cellulaire (2) comporte une couche textile ou non tissée recouvrant la surface opposée à celle du joint.

13. Procédé selon les revendications précédentes, **caractérisé par** l'utilisation de deux matériaux non cellulaires (2) recouvrant les deux côtés de celui cellulaire (3) (structure sandwich), soudés sur les deux côtés.
